# EUROPEAN PATENT APPLICATION

(11) **EP 2 562 408 A1**
(43) Date of publication of application: **27.02.2013**
(21) Application number: 11178865.9
(22) Date of filing: 25.08.2011
(51) Int. Cl.: F02M 33/08, B60K 15/035, F02M 25/08, F02M 31/20, F25B 15/04, B60W 20/00

(54) **Method for handling fuel vapors onboard a hybrid vehicle**

(71) Applicant: Inergy Automotive Systems Research (Société Anonyme), 1120 Bruxelles (BE)
(72) Inventor: Van Schaftingen, Jules-Joseph, 1300 Wavre (BE); Criel, Bjorn, 1750 SINT-MARTENS-LENNIK (BE)
(74) Representative: de la Bigne, Guillaume Michel Marie

(57) **Abstract**

Method for handling fuel vapors onboard a hybrid vehicle comprising an internal combustion engine or ICE and a fuel system for said ICE, according to which the fuel vapors generated in the fuel system are at least partly condensed using an absorption refrigeration device.

## Description

The instant invention relates to a method for handling fuel vapors onboard a hybrid vehicle.

Recently, a new category of vehicles has been introduced to the market, which uses both electricity and internal combustion to propel itself. This group of vehicles has been called "hybrid" vehicles. Although these vehicles make up only a small portion of the global automotive market, their market share increases each year. A new derivation of the hybrid uses electricity only for the first 40 to 60 miles of a given journey assuming the vehicle was plugged into electrical power for a predetermined amount of time before the journey. These vehicles are deemed "plug-in hybrids".

Typically, fuel vapors are generated inside of a fuel tank due to fuel pressure and temperature variations and are stored in a charcoal canister to prevent evaporative emissions of hydrocarbons into the atmosphere. These vapors are periodically purged out of the canister and sent to the engine where they are consumed during the normal combustion process. On a standard gasoline engine vehicle this can occur whenever possible to prevent the canister from becoming stuffed and bleeding hydrocarbons into the environment. Generally these purging periods and associated purge volumes are limited on a hybrid vehicle and when the vehicle is operating in electric mode no purging at all can occur. A "plug-in hybrid" vehicle may go many driving cycles without ever running the gasoline engine. Therefore, a need arises for the fuel system to contain vapor for long periods of time by keeping the system sealed and under pressure in order to limit fuel evaporation.

There are several solutions to limit the loading with vapors of the carbon canister. One of these solutions is to seal the tank. This will pressurize the tank because vapor generation is highly related to the pressure inside the fuel tank. Vapor formation leads to a build-up of a pressure up to a certain equilibrium point where basically no more vapor is formed. It is generally assumed that no more vapor generation occurs after a pressure of 30 to 45 kPa has been built up. Thus, a tank pressurized with pressure from approximately 20 kPa to approximately 50 kPa will significantly reduce the loading with fuel vapors of the carbon canister.

Generally speaking, metal fuel tanks can cope with that problem, but they are heavy. The presently used plastic fuel tanks are generally not designed for an internal pressure above 10 kPa without showing a significant deformation. However, the specifications to be met for deformation of the tank walls are very narrow, so that it is important to avoid an increase in deformation.

Several solutions for improving the pressure resistance/dimensional stability of plastic fuel tanks are available. However, these solutions generally lead to heavier fuel systems since they generally involve reinforcements and/or increased wall thickness.

Accordingly, it is an object of the present invention to solve these problems and to provide a solution to the fuel vapor handling on hybrid vehicles.

Therefore, the present invention concerns a method for handling fuel vapors onboard a hybrid vehicle comprising an internal combustion engine or ICE and a fuel system for said ICE, according to which the fuel vapors generated in the fuel system are at least partly condensed using an absorption refrigeration device.

As a result, the fuel system builds up less or even almost no pressure and said system can be simplified and made lighter in weight.

The terms "hybrid vehicles" are meant to designate vehicles that use two or more distinct power sources to move them, one of them being an internal combustion engine (ICE). The terms most commonly refer to hybrid electric vehicles (HEVs), which combine an ICE and one or more electric motors.

Hence, said vehicles comprise a fuel system for feeding fuel to the ICE.

By "fuel" is meant in the frame of the invention, a hydrocarbon which is burnt by the ICE. It can be gasoline or diesel, eventually mixed with alcohol(s). Since gasoline (pure or blend with alcohol(s)) is more volatile than diesel, the present invention preferably applies to hybrid vehicles using gasoline.

The fuel system according to the invention generally comprises a fuel tank for storing the fuel; a pump for feeding the fuel to the ICE; fuel supply, electric and venting lines.

The fuel tank is preferably made of plastic (i.e. its wall is principally made of plastic).

The term "plastic" means any material comprising at least one synthetic resin polymer.

Any type of plastic may be suitable. Particularly suitable plastics belong to the category of thermoplastics.

In particular, it is possible to use polyolefins, thermoplastic polyesters, polyketones, polyamides and copolymers thereof. A blend of polymers or copolymers may also be used; similarly it is also possible to use a blend of polymeric materials with inorganic, organic and/or natural fillers such as, for example but in non-limiting way: carbon, salts and other inorganic derivatives, natural or polymeric fibers. It is also possible to use multilayer structures composed of stacked and joined layers comprising at least one of the polymers or copolymers described above.

One polymer that is often used is polyethylene. Excellent results have been obtained with high-density polyethylene (HDPE).

The wall of the tank may be composed of a single thermoplastic layer, or of two layers. One or more other possible additional layers may, advantageously, be composed of layers made of a barrier material to liquids and/or gases. Preferably, the nature and thickness of the barrier layer are chosen so as to minimize the permeability of liquids and gases in contact with the internal surface of the tank. Preferably, this layer is based on a barrier resin, that is to say a resin that is impermeable to the fuel such as, for example, EVOH (a partially hydrolyzed ethylene/vinyl acetate copolymer). Alternatively, the tank may be subjected to a surface treatment (fluorination or sulfonation) for the purpose of making it impermeable to the fuel.

The fuel tank preferably comprises an EVOH-based barrier layer located between the HDPE-based layers.

Generally, the different elements of the fuel system are linked together in a sealed, leak tight way so as to prevent fuel emissions in the atmosphere.

According to the invention, at least part of the fuel vapors generated in said fuel system, are condensed i.e. they are liquefied. Preferably, the liquid, condensed fuel is returned to the fuel tank.

The method of the invention uses an absorption refrigeration device for condensing these fuel vapors, i.e. a device based on the principle of absorptive refrigeration using a source of heat to provide the energy needed to drive the cooling process. The absorption cooling cycle can be described in three phases:
1. Evaporation: A liquid refrigerant evaporates in a low partial pressure environment, thus extracting heat from its surroundings ― the refrigerator. In the frame of the invention, the refrigerator generally is a closed volume which receives the fuel vapors from the fuel system. Hence, the evaporation of the absorption cycle acts as a condenser for the fuel vapors.
2. Absorption: The gaseous refrigerant is absorbed - dissolved into another liquid or absorbed on a solid - reducing its partial pressure in the evaporator thus allowing more liquid refrigerant to evaporate in said evaporator.
3. Regeneration: The refrigerant-rich liquid or solid is heated, causing the refrigerant to evaporate out. It is then condensed to replenish the supply of liquid refrigerant in the evaporator.

Said device uses a refrigerant i.e. a fluid of which the condensation is exothermic and the evaporation, endothermic; and an absorbent i.e. a liquid or a solid into or onto which the refrigerant vapors are absorbed, preferably through an exothermic reaction. A liquid absorbent is preferred because it makes it easier to cope with its regeneration in a continuous manner and hence, to make the process/method work in a loop. A couple of fluids that gives good results in practice is the couple ammonia (as refrigerant) and water (as absorber) or NH3/H2O.

It results from the above that the absorption refrigeration device of the invention generally comprises an evaporator, an absorber, a regenerator and a condenser. Generally, it also comprises a pump for pumping the liquid from the absorber into the regenerator and an expansion device (generally a valve) at the entrance of the evaporator in order to allow the condensed refrigerant to evaporate.

The regenerator needs a heat source to evaporate the absorbed refrigerant vapors. This heat source may be any heat source available on the vehicle, or an exterior, specific one.

In the first category, when said vehicle is a HEV, a source which is readily available is the heat generated by the Joule effect of the electrical devices including the battery and the alternator. Another one would be the heat of the engine (readily available through the cooling liquid of said engine and through its exhaust gasses).

Another indirect source of heat is constituted by part of the fuel vapors themselves. In this embodiment, part of the vapors is burnt in an adequate device and the heat of combustion so generated is then used in the regenerator. A small burner equipped with hot filament or spark ignition can be used to that end.

It is worth noting that this embodiment can also advantageously be used for any fuel system, independently of the fact that it would or not be used for the ICE of a hybrid vehicle.

In the second category, mention can be made of high thermal capacity or phase change materials. A phase change material (PCM) is a substance with a high heat of fusion or crystallization which, melting and solidifying at a certain temperature, is capable of storing and releasing large amounts of energy. Heat is absorbed or released when the material changes from solid to liquid and vice versa; thus, PCMs are classified as latent heat storage (LHS) units. PCMs based on paraffins or mixtures of paraffins and salts can be used.

This embodiment can also advantageously be used for any fuel system, independently of the fact that it would or not be used for the ICE of a hybrid vehicle.

The present invention also relates to a hybrid vehicle suitable for the method described above and which hence comprises an ICE, a fuel system generating fuel vapors and an absorption refrigeration device in communication with the fuel system so as to be able to condense at least part of these vapors.

All the (preferred) features described above in the frame of the method do apply to the hybrid vehicle according to the invention as well.

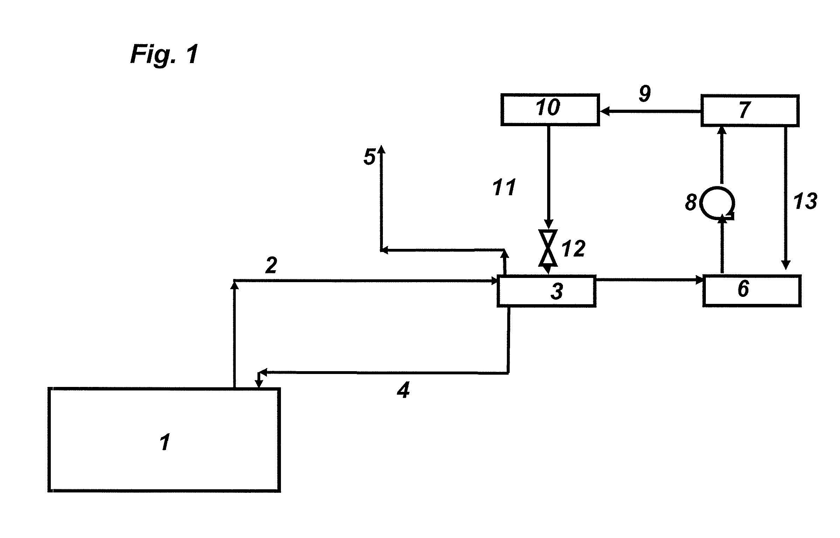

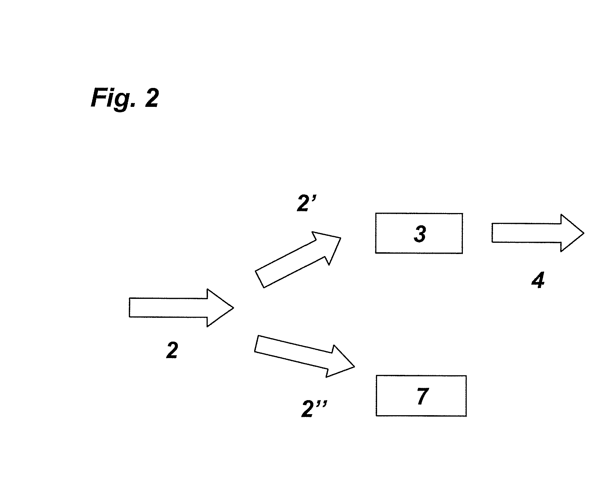

The present invention is described more in detail with ref. to Figures 1 and 2 attached which merely illustrate some preferred embodiments of said invention without limiting its scope thereto.

Fig. 1 is a flowchart schematically showing a preferred embodiment of the method according to the invention. Fig. 2 shows a preferred embodiment of part of said method.

The left side of Figure 1 shows the method as far as the fuel cycle is concerned. It shows a fuel tank (1) generating a flow of fuel vapor (2) which is brought into contact with an evaporator (3), where liquid NH3 is evaporated to as to cool down and condense at least part of the fuel vapors which are returned as a liquid stream (4) to the fuel tank (1). Those vapors which were not condensed if any (e.g. in case of extreme fuel vapor generation levels) are routed as a stream of vapor (5) to an auxiliary canister (not shown).

The right side of Figure 1 shows the method as far as the absorption refrigeration cycle is concerned. In this cycle, the NH3 vapors leaving the evaporator (3) are absorbed in water in an absorber (6) which hence contains a NH3/H2O solution enriched in NH3. A stream of this solution is fed to a regenerator (7) by means of a pump (8).

Thanks to heat provided to this generator as explained above, a stream of NH3 vapor (9) is generated which is sent to a condenser (10), from which a stream of liquid NH3 (11) is leaving, which before entering the evaporator (3), is expanded by means of an expansion valve (12) e.g. a throttle valve.

A stream of water (13) containing the remainder of the NH3 (which has not been evaporated) is fed back to the absorber (6).

Figure 2 shows the preferred embodiment described above according to which:
- A part (2') of the fuel vapors leaving the fuel system (2) is condensed (2) by being sent to the evaporator (3) and is then returned as liquid fuel (4) to the fuel tank.
- Another part (2") of the fuel vapors leaving the fuel system (2) is burnt in an adequate device and the heat so generated is then used in the regenerator (7).

## Claims

1. Method for handling fuel vapors onboard a hybrid vehicle comprising an internal combustion engine or ICE and a fuel system for said ICE, according to which the fuel vapors generated in the fuel system are at least partly condensed using an absorption refrigeration device.

2. Method according to claim 1, wherein the fuel system comprises a plastic fuel tank.

3. Method according to the preceding claim, wherein the liquid, condensed fuel is returned to the fuel tank.

4. Method according to any of the preceding claims, wherein the absorption refrigeration device uses a refrigerant and a liquid absorbent.

5. Method according to the preceding claim, wherein the refrigerant is ammonia and the liquid absorbent is water.

6. Method according to any of the preceding claims, wherein the absorption refrigeration device comprises an evaporator, an absorber, a regenerator and a condenser.

7. Method according to the preceding claim, wherein the regenerator uses a heat source chosen from the heat generated by the Joule effect of electrical devices onboard the vehicle and/or heat generated by the engine.

8. Method according to claim 6, wherein the regenerator uses as heat source, the heat of combustion of part of the fuel vapors which are therefore burnt in an adequate device.

9. Method according to claim 6, wherein the regenerator uses as heat source, heat generated by a high thermal capacity or phase change material.

10. Hybrid vehicle suitable for the method according to any of the preceding claims comprising an ICE, a fuel system generating fuel vapors and an absorption refrigeration device in communication with the fuel system so as to be able to condense at least part of its vapors.
